# EUROPEAN PATENT APPLICATION

(11) **EP 4 592 015 A1**
(43) Date of publication of application: **30.07.2025**
(21) Application number: 25151561.5
(22) Date of filing: 13.01.2025
(51) Int. Cl.: B23K 26/00, B23K 26/18, B23K 26/40, B23K 26/50, B23K 103/16, B23K 101/34, B32B 7/00

(54) **MATERIAL-COATING SYSTEM TUNED FOR REMOVAL VIA LASER ABLATION**

(30) Priority: 24.01.2024 US 202418421637
(71) Applicant: The Boeing Company, Arlington, VA 22202 (US)
(72) Inventor: GREGERSEN, Kimberly-Alice, Arlington, 22202 (US); BLOHOWIAK, Kay Y., Arlington, 22202 (US); FRONING, Marc J., Arlington, 22202 (US); HICKER, Alexander Anthony, Arlington, 22202 (US); JOHNSON, Matthew Carl, Arlington, 22202 (US); TSOTSIS, Thomas Karl, Arlington, 22202 (US); HELM, Scott Lewis, Arlington, 22202 (US)
(74) Representative: Boult Wade Tennant LLP

(57) **Abstract**

Examples are disclosed that relate to a material-coating system (200) having properties that are tuned for fast removal via laser ablation. In one example, the material-coating system (200) includes a substrate (202), a laser-ablation layer (204) deposited on the substrate (202), and a topcoat layer (206) deposited on top of the laser-ablation layer (204). The topcoat layer (206) is at least partially transparent to laser light (106) in a designated wavelength. The laser-ablation layer (204) is tuned to absorb the designated wavelength of the laser light (106) such that the application of the laser light (106) in the designated wavelength to the laser-ablation layer (204) causes the laser-ablation layer (204) and the topcoat layer (206) to collectively de-bond from the substrate (202).

## Description

### FIELD

The present disclosure relates generally to the field of material coatings, and more specifically to the removal of material coatings from a solid surface.

### BACKGROUND

Removal of material coatings, such as exterior decorative and non-decorative finishes, is a common practice as part of maintenance, repair, and overhaul (MRO) activities for objects that are coated with such material coatings, such as a building or a vehicle - e.g., an aircraft. When an object is out of service for MRO activities, the loss of revenue or operational readiness is significant. Thus, MRO technicians are motivated to remove such material coatings as part of MRO activities quickly in order to return the object back to operation.

Conventional techniques for removing material coatings have various issues. As one example, material coatings can be removed from an object via abrasion or sanding. Conventional hand sanding lacks sufficient control to avoid causing damage to an underlying substrate of the object. When sanding is performed by hand, the process is slow and presents ergonomic challenges for operators. Moreover, operators need to wear a significant amount of personal-protection equipment (PPE) to protect themselves from abrasive dust and/or other material particles produced during sanding, which adds to the cost of conventional sanding.

As another example, material coatings can be removed from an object via chemical stripping. Conventional chemical stripping requires a long dwell time for the chemicals to effectively strip a material coating from a surface of an object. Further, conventional chemical stripping generates a significant amount of hazardous waste that has to be handled and disposed of with carefully controlled processes, which increases the cost of conventional chemical stripping. Also, operators need to wear a significant amount of PPE to protect themselves from the hazardous stripping chemicals and the chemical waste that is generated from conventional chemical stripping. Alternatively, to avoid some of the issues related to handling the conventional stripping chemicals, environmentally sustainable strippers can be used instead. However, such environmentally sustainable strippers have even longer dwell times than the conventional stripping chemicals.

As yet another example, material coatings can be removed from an object via top-down laser material removal. Top-down laser material removal is performed by setting a focal point of a laser to a surface of the topmost material layer. Using current laser technology, each layer is removed 25-50 micrometers at a time with each pass of the laser. Laser material removal requires the laser to make several passes over the same area to remove the material layer by layer until an underlying substrate is exposed. Since the laser requires multiple passes to remove all of the layers, top-down laser material removal is still time consuming even if it offers additional benefits relative to conventional sanding and chemical stripping. Removal of more material on a per pass basis is possible via top-down laser material removal in order to speed up the overall process. For example, the laser power can be increased and/or the depth of the focal point of the laser can be increased in order to remove more of the material with each pass. However, these adjustments in the operating parameters of the laser can cause the laser to damage the underlying substrate during top-down laser material removal. Moreover, in some scenarios, the parameters of the laser may not be adjustable.

### SUMMARY

Examples are disclosed that relate to a material-coating system having properties that are tuned for fast removal via laser ablation. In one example, the material-coating system includes a substrate, a laser-ablation layer deposited on the substrate, and a topcoat layer deposited on top of the laser-ablation layer. The topcoat layer is at least partially transparent to laser light in a designated wavelength. The laser-ablation layer is tuned to absorb the designated wavelength of the laser light such that the application of the laser light in the designated wavelength to the laser-ablation layer causes the laser-ablation layer and the topcoat layer to collectively de-bond from the substrate.

The features, functions, and advantages that have been discussed can be achieved independently in various examples or may be combined in yet other examples, further details of which can be seen with reference to the following description and drawings.

### BRIEF DESCRIPTION OF THE DRAWINGS

FIG. 1 shows an example scenario in which layers of a material-coating system are removed from an aircraft via laser ablation.
FIG. 2 schematically shows an example of a material-coating system.
FIG. 3 schematically shows an example laser-ablation layer of a material-coating system that is doped with an additive material that is configured to absorb laser light in a designated wavelength.
FIG. 4 schematically shows an example of laser ablation for removing layers of the material-coating system of FIG. 2.
FIG. 5 schematically shows another example of laser ablation for removing layers of a different material-coating system.
FIG. 6 is a flow chart of an example method for producing a material-coating system.

### DETAILED DESCRIPTION

Conventional techniques for removing material coatings from an object have various issues. For example, conventional sanding and chemical stripping are slow, tedious, and costly and require operators that perform these processes to wear a significant amount of personal protection equipment (PPE). Top-down laser material removal provides several benefits relative to conventional sanding and chemical stripping. However, top-down laser material removal is still relatively slow and tedious.

Laser ablation is a technology that is becoming more prominent in industrial hygiene and sustainability applications, and more particularly, is being used to remove material coatings from a solid surface. Laser ablation is a process in which a laser generates a highly focused and intense beam of light that is directed onto the surface of the material to be ablated. The material absorbs the laser energy, and this absorption causes the material to undergo various physical and chemical changes. The absorbed laser energy can lead to different processes depending on the laser parameters and the material. These processes may include heating, melting, vaporization, and ionization of the material. As a result of the absorbed energy, the material is either vaporized directly into a plume of particles or undergoes a phase change, such as melting or sublimation. When the material undergoes the phase change, the material becomes de-bonded from the interface of interest. Laser ablation offers a high degree of control and precision. The characteristics of laser light emitted by the laser, such as its intensity and duration, can be carefully adjusted to achieve the desired material removal or modification with minimal damage to the surrounding areas. Laser ablation avoids the issues of conventional sanding and chemical stripping by being faster and less tedious than manual sanding and being faster than the dwell time required for chemical stripping. Moreover, laser ablation produces less waste material relative to conventional sanding and chemical stripping. Furthermore, although top-down laser material removal offers additional benefits relative to conventional sanding and chemical stripping, top-down laser material removal is still time consuming, because the laser requires multiple passes to remove all layers of material from an interface of interest.

Accordingly, there is a desire to remove material coating from an object in a manner that is faster than other conventional approaches while still protecting the underlying substrate of the object when removing material coatings from the substrate. Thus, examples are disclosed that relate to a material-coating system having properties that are tuned for fast removal via laser ablation. In some examples, the material-coating system includes a substrate, a laser-ablation layer deposited on the substrate, and a topcoat layer deposited on top of the laser-ablation layer. The topcoat layer is at least partially transparent to laser light in a designated wavelength. The laser-ablation layer is tuned to absorb the designated wavelength of the laser light such that the application of the laser light in the designated wavelength to the laser-ablation layer causes the laser-ablation layer and the topcoat layer to collectively de-bond from the substrate.

Since the laser-ablation layer is positioned underneath at least the topcoat layer (and one or more additional intermediate layers in some examples), when the laser-ablation layer absorbs the energy from the laser in the designated wavelength and becomes de-bonded, the topcoat layer (and any intermediate layer(s)) also become separated from the underlying substrate. In this way, multiple layers of the material-coating system can be removed from the substrate with each pass of the laser. This allows for layers of the material-coating system to be removed at a rate that is at least two to three times faster than top-down laser material removal. Moreover, the material-coating system still benefits from the other advantages of laser ablation relative to conventional sanding and chemical stripping. For example, time, cost, and labor associated with PPE required for conventional sanding and chemical stripping as well as disposal of hazardous waste could be reduced or eliminated by using the laser-based material-coating system.

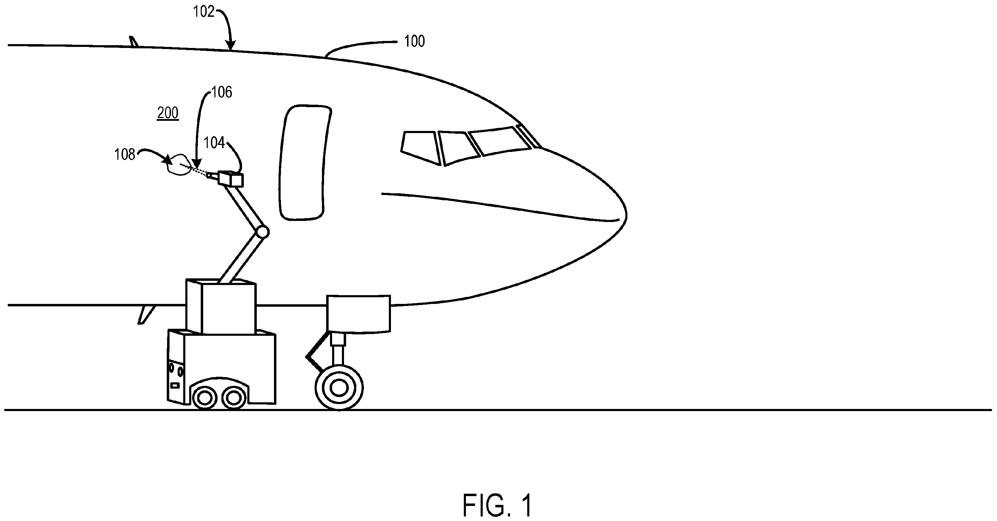

FIG. 1 shows an example scenario in which layers of a material-coating system of the present disclosure are removed from an aircraft via laser ablation. Periodically, an aircraft 100 undergoes MRO activities, one of which is removal and replacement of material coatings on an external surface 102 of the aircraft 100. For example, the material coatings can include exterior decorative and non-decorative finishes. In some examples, the material coating may have become degraded over time due to environmental exposure during operation of the aircraft 100 and thus need to be removed and replaced with upgraded material coatings. In some other examples, the aircraft 100 may be covered with a new livery having a different color scheme or design.

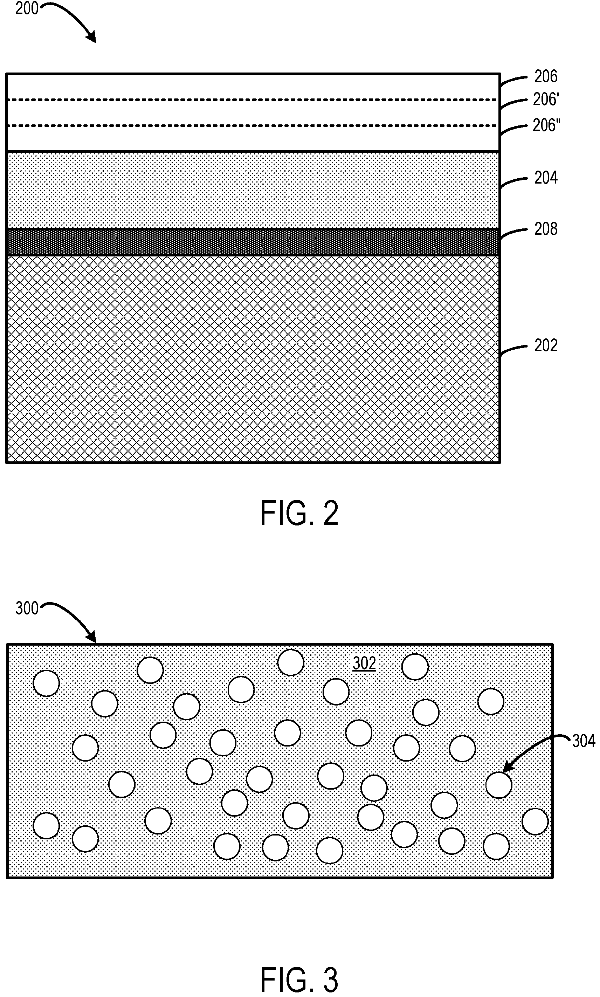

In some examples, including the illustrated example, the external surface 102 of the aircraft 100 is coated with a material-coating system 200. The material-coating system 200 is configured to be removed from the external surface 102 quicker and easier than other conventional approaches. In particular, the material-coating system 200 includes a laser-ablation layer 204 (shown in FIG. 2) that is tuned to absorb laser light 106 in a designated wavelength emitted from a laser 104 that is being used to remove layers of the material-coating system 200. The material-coating system 200 is specifically configured such that one or more additional layers, referred to herein as topcoat layers (e.g., topcoat layer 206 shown in FIG. 2), are deposited on top of the laser-ablation layer 204. When laser light 106 in the designated wavelength is emitted from the laser 104 and applied to the material-coating system 200, the laser-ablation layer 204 absorbs energy from the laser light that causes the laser-ablation layer 204 and the additional topcoat layer(s) 206 to collectively de-bond from an underlying substrate 202 (shown in FIG. 2) for removal from the substrate 202 via laser ablation.

The laser 104 can be configured to perform any suitable removal operations / routing to apply laser light to the material-coating system 200 in order to remove layers of the material-coating system 200 from the aircraft 100. In some examples, the laser 104 performs a scanning removal routine in which the laser 104 scans back and forth across a region 108 of the aircraft 100 to apply laser light to the region 108. Further, the laser 104 can make multiple passes over the same region 108 as part of the scanning routine to ensure that the laser-ablation layer 204 absorbs enough energy from the laser light 106 to de-bond from the substrate 202.

In some examples, the laser 104 can be controlled in an automated fashion. For example, the laser 104 can be included in a robotic system that automatically performs laser ablation across the external surface 102 of the aircraft. In some other examples, the laser 104 can be controlled manually by a human operator. The laser 104 can take any suitable form.

The laser-ablation layer 204 may be tuned to absorb energy from laser light in any suitable wavelength or wavelength range. In some examples, the laser 104 can be configured to emit infrared light or near-infrared light (e.g., at a wavelength of 1064 nanometers, or -1064 nanometers). For example, a fiber laser may be employed for removing layers of the material-coating system 200. The fiber laser uses an ytterbium fiber as a lasing material. The fiber laser is highly efficient and easily serviced in the field. In some other examples, the material-coating system 200 may be tuned for use with a different type of laser that emits laser light in a different wavelength, such as an excimer laser, a CO₂ laser, a fiber laser, or another type of laser that emits laser light in a different wavelength. The choice of laser depends on the specific needs of the application, such as the material properties, the required precision, the desired depth of ablation, and the allowable thermal effects on the surrounding material. The appropriate laser may be selected to optimize the efficiency and effectiveness of laser ablation for MRO activities performed on the aircraft 100.

FIG. 1 shows an example scenario in which the material-coating system 200 coating the external surface 102 of the aircraft 100 is tuned to the specific parameters of the laser 104 such that layers of the material-coating system 200 can be removed from the aircraft 100 via laser ablation in a manner that is quicker than other conventional approaches. Concepts discussed herein that are related to a material-coating system that is configured for fast removal via laser ablation are broadly applicable to other applications beyond just aircraft. In some other examples, the material-coating system can be applied to surfaces of other types of vehicles or other structures and the same benefits can still be realized in regard to fast removal via laser ablation.

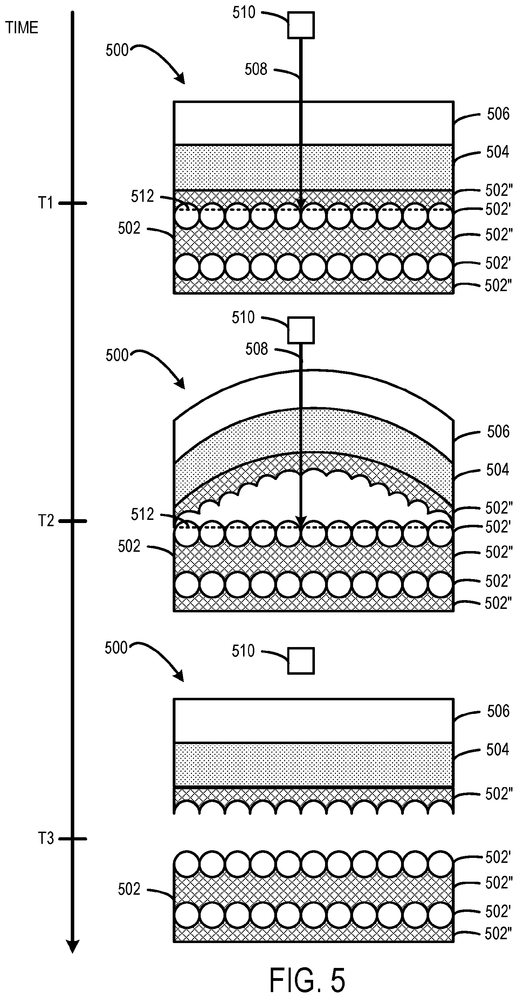

FIG. 2 schematically shows an example of the material-coating system 200. The material-coating system 200 includes a substrate 202, a laser-ablation layer 204, and a topcoat layer 206. The substrate 202 forms the structural base layer of the material-coating system 200. In some examples, including the example of the aircraft 100 shown in FIG. 1, the substrate 202 corresponds to the external surface 102 of the aircraft 100. The substrate 202 can comprise any suitable material. In some examples, the substrate 202 includes a metal alloy, such as aluminum or titanium. In some other examples, the substrate 202 includes carbon fiber. Generally, when layers of the material-coating system 200 are removed via laser ablation, the substrate 202 remains in place intact as part of the underlying structure. Although in some examples, at least some portion of the substrate can be removed via laser ablation as will be discussed in further detail below with reference to FIG. 5.

The laser-ablation layer 204 is deposited on top of the substrate 202 in the material-coating system 200. The topcoat layer 206 is deposited on top of the laser-ablation layer 204. The topcoat layer 206 is at least partially transparent to laser light in a designated wavelength to allow the laser light in the designated wavelength to pass through the topcoat layer 206 to the laser-ablation layer 204. The designated wavelength refers to the wavelength of laser light emitted from a laser and applied to the material-coating system 200 during laser ablation to remove layers of the material-coating system 200 from the substrate 202.

In some examples, the topcoat layer 206 can be totally transparent to laser light in the designated wavelength. For example, the topcoat layer 206 can be a visually transparent clear coat that is applied as a protective finish to protect the underlying layers of the material-coating system 200 from environmental exposure.

In some examples, the topcoat layer 206 can be partially transparent to laser light in the designated wavelength such that at least some laser light passes through the topcoat layer 206 to the laser-ablation layer 204. For example, the topcoat layer 206 can include some amount of pigment that absorbs some amount of the laser light while still allowing some amount of the laser light to pass through the topcoat layer 206 to the laser-ablation layer 204. In some examples, the topcoat layer 206 is a visually opaque paint layer.

In some examples, the topcoat layer 206 can be at least partially transparent to light in other wavelengths besides the designated wavelength. In some examples, the topcoat layer 206 can absorb at least some light in other wavelengths besides the designated wavelength.

In some examples, a plurality of topcoat layers 206, 206', 206" can be deposited on top of the laser-ablation layer 204. Each of the plurality of topcoat layers 206, 206', 206" is at least partially transparent to laser light in the designated wavelength to allow the laser light in the designated wavelength to pass through the plurality of topcoat layers 206, 206', 206" to the laser-ablation layer 204. For example, different topcoat layers of the plurality of topcoat layers 206, 206', 206" include different color pigments that make up a color scheme or specific design of the livery of the aircraft 100 shown in FIG. 1. In some other examples, different topcoat layers of the plurality of topcoat layers 206, 206', 206" can provide different features or functions. For example, different topcoat layers can provide protection from different types of environmental elements - e.g., UV light protection, thermal protection, collision protection, or other types of protection. The material-coating system 200 can include any suitable number and/or type of topcoat layer(s) 206 deposited on top of the laser-ablation layer 204.

The laser-ablation layer 204 is tuned to absorb the designated wavelength of the laser light such that the application of the laser light in the designated wavelength to the laser-ablation layer 204 causes the laser-ablation layer 204 and the topcoat layer 206 (and topcoat layers 206', 206" when included) to collectively de-bond from the substrate 202. In this way, multiple layers of the material-coating system 200 can be removed from the substrate 202 on a per pass basis when the laser emits laser light on the material-coating system 200.

The laser-ablation layer 204 may be tuned to absorb the laser light in the designated wavelength in any suitable manner. In some examples, the laser-ablation layer 204 may be selected or formulated to have material properties that absorb the laser light in the designated wavelength.

In some other examples, the laser-ablation layer 204 is doped with an additive material that is tuned to absorb laser light in the designated wavelength. FIG. 3 schematically shows an example doped laser-ablation layer 300 that can be included in a material-coating system of the present disclosure. For example, the doped laser-ablation layer 300 may correspond to the laser-ablation layer 204 of the material-coating system 200 shown in FIG. 2. The doped laser-ablation layer 300 includes a base material 302 that is doped with an additive material 304 that is tuned to absorb laser light in the designated wavelength. In some examples, the base material 302, itself has material properties that are tuned for absorption of laser light in the designated wavelength. In some other examples, the base material 302 at least partially transmits or at least does not absorb laser light in the designated wavelength.

The additive material 304 can include any suitable type of material that is tuned to absorb the laser light in the designated wavelength. In some examples, the additive material 304 comprises nano-sized particles. In some examples, the additive material 304 comprises nanodiamonds that are tuned (e.g., formulated or selected) to absorb the laser light in the designated wavelength. In some other examples, the additive material 304 comprises carbon nanotubes that are tuned (e.g., formulated or selected) to absorb the laser light in the designated wavelength. In still other examples, the additive material 304 comprises gold nanoparticles that are tuned (e.g., formulated or selected) to absorb the laser light in the designated wavelength. In still other examples, the additive material 304 comprises nanoclay that is tuned (e.g., formulated or selected) to absorb the laser light in the designated wavelength. In still other examples, the additive material 304 comprises micron-sized particles that are larger than the other nano-sized particles discussed above. For example, the micron-sized particles can comprise diamonds, gold, clay or other material. The micron-sized particles are tuned (e.g., formulated or selected) to absorb the laser light in the designated wavelength. In still other examples, the additive material 304 comprises graphene. In some examples, the laser-ablation layer 300 is doped with multiple types of additive materials that are collectively tuned to absorb laser light in the designated wavelength. For example, the laser-ablation layer 300 may include any combination of the additive materials described above and/or any other suitable additive materials. These different types of additive materials have different physical properties that react differently to laser light in different wavelengths. The type of additive material that is used to dope the laser-ablation layer may be selected based on the designated wavelength of the laser light and/or other factors. The nano- and/or micron-sized materials used in the material-coating system may be applied sequentially in different layers or may be combined into "hybrid" layers, or combinations of these, as needed to achieve the desired properties for coating removal. Note that the particles of the additive material 304 are shown schematically and may assume different shapes than those depicted. For example, some types of particles may be planar instead of spherical.

In some examples, including the example of FIG. 2, the material-coating system 200 optionally further comprises a reflective layer 208 deposited on the substrate 202 such that the reflective layer 208 is positioned in between the laser-ablation layer 204 and the substrate 202. In this example, the laser-ablation layer 204 is deposited on the reflective layer 208 instead of being deposited on the substrate 202. The reflective layer 208 is configured to reflect laser light in the designated wavelength. The reflective layer 208 provides various benefits. For example, the reflective layer 208 protects the substrate 202 from being degraded by the laser light such that the substrate 202 may remain intact subsequent to laser ablation being performed. In some examples, the reflective layer 208 may have heat absorption properties to protect the substrate 202. In some examples, the reflective layer 208 may comprise nanoclay to enhance the heat absorption properties of the substrate 202. In some other examples, the reflective layer 208 reflects the laser light in the designated wavelength back through the laser-ablation layer 204 such that the laser-ablation layer 204 can absorb more energy from the laser light when it passes through the laser-ablation layer 204 a second time after being reflected off of the reflective layer 208. This increased absorption causes the laser-ablation layer 204 and the topcoat layer(s) 206 to de-bond from the substrate 202 even faster than if the material-coating system 200 did not include the reflective layer 208.

In some examples, the inclusion of the reflective layer 208 in the material-coating system 200 can depend on the type of material that makes up the substrate 202. For example, if the substrate is formed as a monolithic component, such as with a metal alloy, then the substrate is less likely to need to be repaired or spot repaired during MRO activities. In this case, the substrate does not need to be accessible during MRO activities, so the reflective layer can be included in the material-coating system 200. On the other hand, sometimes the substrate may have known areas that need to be spot repaired as part of MRO activities. For example, such areas may include areas that are susceptible to corrosion. In this case, the reflective layer may be omitted from the material-coating system 200 so that the areas can be addressed as part of the MRO activities. In some examples, the areas may be removed via laser-ablation. Moreover, in some examples, the areas may include material that is tuned to absorb laser light in the designated wavelength in the same manner as the laser-ablation layer 204 so that it can become de-bonded from an interface of interest along with the other layers of the material-coating system 200 via laser ablation.

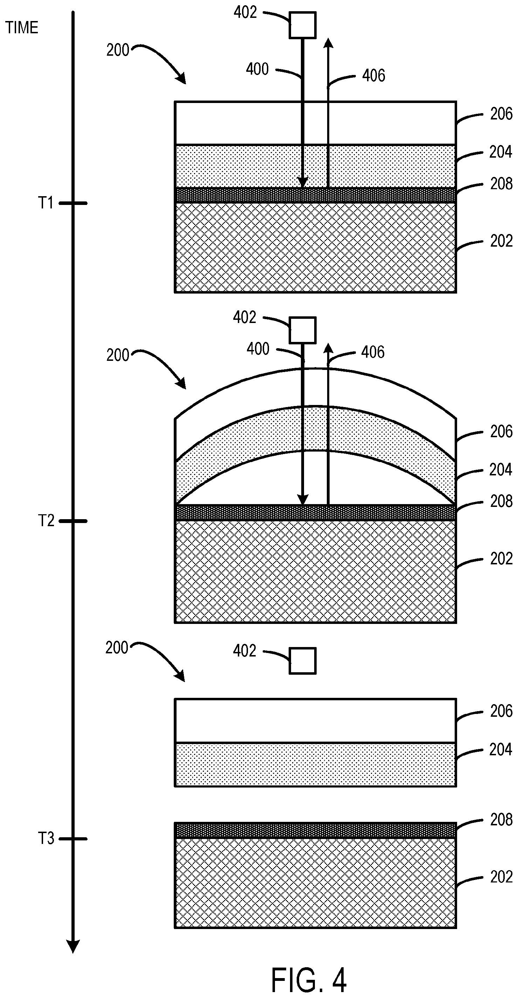

FIG. 4 schematically shows an example of laser ablation for removing layers of the material-coating system 200. At time T1, laser light 400 in the designated wavelength is emitted from a laser 402 and directed into the material-coating system 200. The laser light 400 is transmitted through topcoat layer 206 and into the laser-ablation layer 204. The laser-ablation layer 204 absorbs energy from the laser light 400 as the laser light 400 travels through the laser-ablation layer 204. The laser light 400 reflects off of the reflective layer 208 and becomes reflected laser light 406. The reflected laser light 406 is directed back through the laser-ablation layer 204, where additional energy can be absorbed by the laser-ablation layer 204 from the reflected laser light 406. The reflected laser light 406 is transmitted through the topcoat layer 206 and exits the material-coating system 200. In some examples, the reflected laser light 406 may be significantly absorbed by the laser-ablation layer 204 such that a nominal amount of reflected laser light 406 would exit the material-coating system 200.

At time T2, the laser-ablation layer 404 has absorbed enough energy from the laser light 400 and the reflected laser light 406 to begin to de-bond and bubble up from the reflective layer 208 and the substrate 202. The topcoat layer 206 remains bonded to the laser-ablation layer 204, so the topcoat layer 206 also begins to bubble up away from the reflective layer 208 and the substrate 202.

At time T3, the topcoat layer 206 and the laser-ablation layer 204 collectively have fully de-bonded and separated from the reflective layer 208 and the substrate 202. At this point, laser ablation is complete and the topcoat layer 206 and the laser-ablation layer 204 can be collectively removed leaving the reflective layer 208 and the substrate 202 intact in the material-coating system 200. Further, MRO activities can continue with application of a new laser-ablation layer and a new topcoat layer to the remaining reflective layer 208 and substrate 202 to refinish the material-coating system 200.

Because the laser-ablation layer 204 and the topcoat layer 206 collectively de-bond from the reflective layer 208 and the substrate 202, laser ablation can be completed quicker than other conventional coating removal approaches. This allows for an aircraft to undergo MRO activities and return to operational service more quickly than would be possible by performing other conventional material coating removal approaches, which reduces operating costs of the aircraft, among other benefits.

FIG. 5 schematically shows another example of laser ablation for removing layers of a different material-coating system 500. For example, the material-coating system 500 may correspond to the material-coating system 200 shown in FIG. 2. The material-coating system 500 includes a fiber substrate 502 including layers of fiber strands 502' and resin 502". In some examples, the fiber layer 502' comprise carbon fiber strands. In some other examples, the fiber layer 502' comprise glass fiber strands. In some examples, the substrate 502 can include a plurality of fiber layers and resin layers. In some examples, the substrate 502 includes a glass fiber layer that is stacked on top of one or more carbon fiber layers (with resin layers in between). The material-coating system 500 further includes a laser-ablation layer 504 deposited on top of the substrate 502 and a topcoat layer 506 deposited on the laser-ablation layer 504.

At time T1, laser light 508 in the designated wavelength is emitted from a laser 510 and directed into the material-coating system 500. The laser light 508 is transmitted through topcoat layer 506 and into the laser-ablation layer 504. A focal point or ablation plane 512 of the laser 510 is set to a depth of a top layer of carbon fiber strands 502'. The laser-ablation layer 504 absorbs energy from the laser light 508 as the laser light 300 travels through the laser-ablation layer 504. The laser light 508 further travels into the substrate 502 to the ablation plane 512. The top resin layer 502" of the substrate 502 is tuned to absorb energy from the laser light 508 in the designated wavelength as well.

At time T2, the laser-ablation layer 504 and the top resin layer 502" of the substrate 502 have absorbed enough energy from the laser light 508 to begin to de-bond and bubble up from the top carbon fiber layer 502' of the substrate 502. The topcoat layer 506 remains bonded to the laser-ablation layer 504 and the laser-ablation layer 504 remains bonded to the top resin layer 502", so the topcoat layer 206 also begins to bubble up away from the substrate 502.

At time T3, the topcoat layer 506, the laser-ablation layer 504, and the top resin layer 502" collectively have fully de-bonded and separated from the substrate 502. At this point, laser ablation is complete and the topcoat layer 506, the laser-ablation layer 504, and the top resin layer 502" can be collectively removed leaving the fiber layer 502' and the remainder of the substrate 502 intact in the material-coating system 500. Further, MRO activities can continue with application of a new layer of resin, a new laser-ablation layer, and a new topcoat layer to the remaining layers of the substrate 502 to refinish the material-coating system 500.

In some examples, including the illustrated example, the resin layer 502" is removed during laser ablation to expose the fiber layer 502' of the substrate. There are various reasons why the resin layer 502' would be removed from the substrate 502. For example, the resin layer 502" could be replaced due to environmental exposure of the material-coating system during operation. In some other examples, when an aircraft comes to the end of the operation lifecycle, the aircraft can be deconstructed and recycled or disposed of. The resin layer 502" can be removed via laser ablation during deconstruction so that the material can be properly recycled or disposed of.

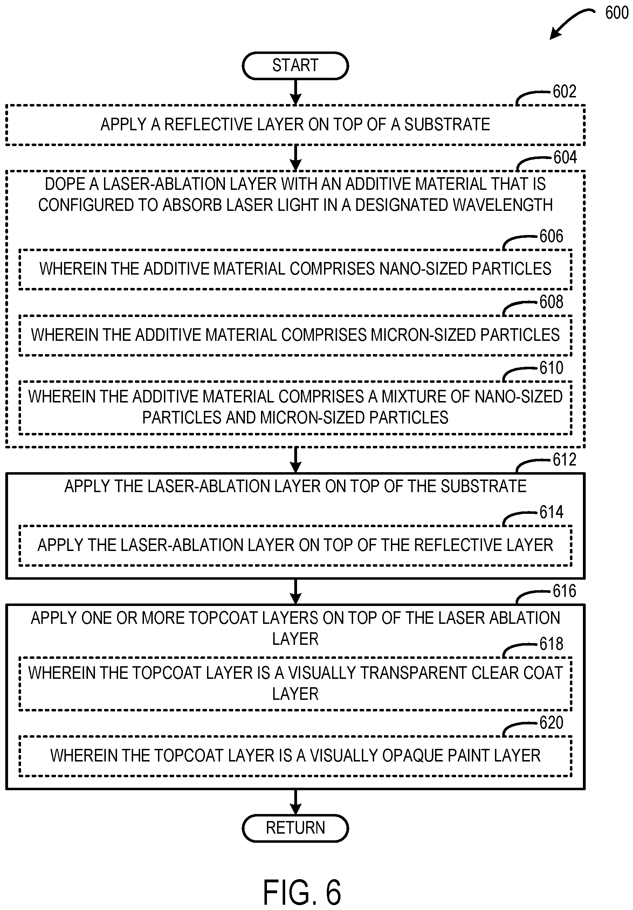

FIG. 6 is a flow chart of an example method 600 for producing a material-coating system of the present disclosure. For example, the method 600 can be performed to produce the material-coating system 200 shown in FIG. 2 or another material-coating system.

In some examples, at 602, the method 600 can include applying a reflective layer on top of a substrate of a material-coating system. The reflective layer is configured to reflect laser light in a designated wavelength.

In some examples, at 604, the method 600 can include doping a laser ablation an additive material that is configured to absorb laser light in the designated wavelength. In some examples, at 606, the additive material can comprise nano-sized particles. In some examples, the nano-sized particles may comprise at least one of nanodiamonds, carbon nanotubes, gold nanoparticles, graphene, and nanoclay. In some examples, at 608, the additive material can comprise micron-sized particles. In some examples, the micron-sized particles may comprise at least one of diamonds, gold, graphene, and clay. In some examples, at 610, the additive material can comprise a mixture of nano-sized particles and micron-sized particles. In some examples, the laser-ablation layer can be doped with multiple types of additive materials that are collectively tuned to absorb laser light in the designated wavelength. For example, the laser-ablation layer may include any combination of the additive materials described above and/or any other suitable additive materials. These different types of additive materials have different physical properties that react differently to laser light in different wavelengths. The type of additive material that is used to dope the laser-ablation layer may be selected based on the designated wavelength of the laser light and/or other factors. The nano- and/or micron-sized materials used in the coating system may be applied sequentially in different layers or may be combined into "hybrid" layers, or combinations of these, as needed to achieve the desired properties for coating removal.

In some other examples, the laser-ablation layer can be tuned in a different manner that does not involve doping the laser-ablation layer with additive material. Instead, the material properties of the laser-ablation layer itself can be selected / fabricated to absorb laser light in the designated wavelength.

At 612, the method 600 includes applying the laser-ablation layer on top of the substrate. In some examples where the material-coating system includes a reflective layer, at 614, the method 600 can include applying the laser-ablation layer on top of the reflective layer.

At 616, the method 600 includes applying one or more topcoat layers on top of the laser-ablation layer in the material-coating system. In some examples, at 618, the topcoat layer(s) can include a visually transparent clear coat layer. In some examples, at 620, the topcoat layer(s) can include a visually opaque paint layer.

The method described above can be performed to produce a material-coating system where the laser-ablation layer is positioned underneath at least the topcoat layer (and one or more additional intermediate layers in some examples). When the laser-ablation layer absorbs energy from a laser in a designated wavelength and becomes de-bonded, the topcoat layer (and any intermediate layer(s)) also become separated from the underlying substrate. In this way, multiple layers of the material-coating system can be removed from the substrate with each pass of the laser during laser ablation. This allows for layers of the material-coating system to be removed faster than other conventional approaches.

In some examples, a material-coating system comprises a substrate, a laser-ablation layer deposited on the substrate, and a topcoat layer deposited on top of the laser-ablation layer, wherein the topcoat layer is at least partially transparent to laser light in a designated wavelength, and wherein the laser-ablation layer is tuned to absorb the designated wavelength of the laser light such that the application of the laser light in the designated wavelength to the laser-ablation layer causes the laser-ablation layer and the topcoat layer to collectively de-bond from the substrate. In this example and/or other examples, the laser-ablation layer may be doped with an additive material that is tuned to absorb laser light in the designated wavelength. In this example and/or other examples, the additive material may comprise nano-sized particles. In this example and/or other examples, the nano-sized particles may comprise at least one of nanodiamonds, carbon nanotubes, gold nanoparticles, graphene, and nanoclay. In this example and/or other examples, the additive material may comprise micron-sized particles. In this example and/or other examples, the additive material may comprise a mixture of nano-sized particles and micron-sized particles. In this example and/or other examples, the topcoat layer may be a visually transparent clear coat layer. In this example and/or other examples, the material-coating system may further comprise a reflective layer deposited in between the laser-ablation layer and the substrate and configured to reflect laser light in the designated wavelength. In this example and/or other examples, the substrate may comprise a metal alloy. In this example and/or other examples, the substrate may comprise a fiber layer and a resin layer, and the resin layer may be tuned to absorb the designated wavelength of the laser light such that the application of the laser light in the designated wavelength to the resin layer causes the resin layer to de-bond from the fiber layer of the substrate.

In some other examples, a process for fabricating a material-coating system comprises applying a laser-ablation layer on top of a substrate, and applying a topcoat layer on top of the laser-ablation layer, wherein the topcoat layer is at least partially transparent to laser light in a designated wavelength, and wherein the laser-ablation layer is tuned to absorb the designated wavelength of the laser light such that the application of the laser light in the designated wavelength to the laser-ablation layer causes the laser-ablation layer and the topcoat layer to collectively de-bond from the substrate. In this example and/or other examples, the process for fabricating the material-coating system may further comprise applying a reflective layer on top of the substrate, and applying the laser-ablation layer on top of the reflective layer. In this example and/or other examples, the process for fabricating the material-coating system may further comprise doping the laser-ablation layer with an additive material that is tuned to absorb laser light in the designated wavelength. In this example and/or other examples, the additive material may comprise nano-sized particles. In this example and/or other examples, the nano-sized particles may comprise at least one of nanodiamonds, carbon nanotubes, gold nanoparticles, graphene, and nanoclay. In this example and/or other examples, the additive material may comprise micron-sized particles. In this example and/or other examples, the additive material may comprise a mixture of nano-sized particles and micron-sized particles. In this example and/or other examples, the topcoat layer may be a visually transparent clear coat layer. In this example and/or other examples, the substrate may comprise a fiber layer and a resin layer, and the resin layer may be tuned to absorb the designated wavelength of the laser light such that the application of the laser light in the designated wavelength to the resin layer causes the resin layer to de-bond from the fiber layer of the substrate.

In some other examples, a material-coating system comprises a substrate, a reflective layer deposited on the substrate, a laser-ablation layer deposited on the reflective layer, and a topcoat layer deposited on top of the laser-ablation layer, wherein the topcoat layer is at least partially transparent to laser light in a designated wavelength, wherein the laser-ablation layer is doped with an additive material that is tuned to absorb the designated wavelength of the laser light such that the application of the laser light in the designated wavelength to the laser-ablation layer causes the laser-ablation layer and the topcoat layer to collectively de-bond from the substrate, and wherein the reflective layer is configured to reflect laser light in the designated wavelength.

The following clauses present further examples:
Clause 1. A material-coating system (200) comprising: a substrate (202); a laser-ablation layer (204) deposited on the substrate (202); and a topcoat layer (206) deposited on top of the laser-ablation layer (204), wherein the topcoat layer (206) is at least partially transparent to laser light (106) in a designated wavelength, and wherein the laser-ablation layer (204) is tuned to absorb the designated wavelength of the laser light (106) such that the application of the laser light (106) in the designated wavelength to the laser-ablation layer (204) causes the laser-ablation layer (204) and the topcoat layer (206) to collectively de-bond from the substrate (202).
Clause 2. The material-coating system (200) of Clause 1, wherein the laser-ablation layer (204) is doped with an additive material (304) that is tuned to absorb laser light (106) in the designated wavelength.
Clause 3. The material-coating system (200) of Clause 2, wherein the additive material (304) comprises nano-sized particles.
Clause 4. The material-coating system (200) of Clause 3, wherein the nano-sized particles comprise at least one of nanodiamonds, carbon nanotubes, gold nanoparticles, graphene, and nanoclay.
Clause 5. The material-coating system (200) of Clause 2, wherein the additive material (304) comprises micron-sized particles.
Clause 6. The material coating system (200) of any of Clause 2-4, wherein the additive material (304) comprises a mixture of nano-sized particles and micron-sized particles.
Clause 7. The material-coating system (200) of any preceding Clause, wherein the topcoat layer (206) is a visually transparent clear coat layer.
Clause 8. The material-coating system (200) of any preceding Clause, further comprising: a reflective layer (208) deposited in between the laser-ablation layer (204) and the substrate (202) and configured to reflect laser light (106) in the designated wavelength.
Clause 9. The material-coating system (200) of any preceding Clause, wherein the substrate (202) comprises a metal alloy.
Clause 10. The material-coating system (200) of any preceding Clause, wherein the substrate (502) comprises a fiber layer (502') and a resin layer (502"), and wherein the resin layer (502") is tuned to absorb the designated wavelength of the laser light (508) such that the application of the laser light (508) in the designated wavelength to the resin layer (502") causes the resin layer (502") to de-bond from the fiber layer (502') of the substrate (502).
Clause 11. A process for fabricating a material-coating (200) system, the process comprising: applying a laser-ablation layer (204) on top of a substrate (202); and applying a topcoat layer (206) on top of the laser-ablation layer (204), wherein the topcoat layer (206) is at least partially transparent to laser light (106) in a designated wavelength, and wherein the laser-ablation layer (204) is tuned to absorb the designated wavelength of the laser light (106) such that the application of the laser light (106) in the designated wavelength to the laser-ablation layer (204) causes the laser-ablation layer (204) and the topcoat layer (206) to collectively de-bond from the substrate (202).
Clause 12. The process for fabricating the material-coating system (200) of Clause 11, further comprising: applying a reflective layer (208) on top of the substrate (202); and applying the laser-ablation layer (204) on top of the reflective layer (208).
Clause 13. The process for fabricating the material-coating system (200) of Clause 11 or Clause 12, further comprising: doping the laser-ablation layer (204) with an additive material (304) that is tuned to absorb laser light (106) in the designated wavelength.
Clause 14. The process for fabricating the material-coating system (200) of Clause 13, wherein the additive material (304) comprises nano-sized particles.
Clause 15. The process for fabricating the material-coating system (200) of Clause 14, wherein the nano-sized particles comprise at least one of nanodiamonds, carbon nanotubes, gold nanoparticles, graphene, and nanoclay.
Clause 16. The process for fabricating the material-coating system (200) of Clause 13, wherein the additive material (304) comprises micron-sized particles.
Clause 17. The process for fabricating the material-coating system (200) of any of Clause 13 - 16, wherein the additive material (304) comprises a mixture of nano-sized particles and micron-sized particles.
Clause 18. The process for fabricating the material-coating system (200) of any of Clause 11 - 17, wherein the topcoat layer (206) is a visually transparent clear coat layer.
Clause 19. The process for fabricating the material-coating system (200) of any of Clause 11 - 18, wherein the substrate (502) comprises a fiber layer (502') and a resin layer (502"), and wherein the resin layer (502") is tuned to absorb the designated wavelength of the laser light (106) such that the application of the laser light (106) in the designated wavelength to the resin layer (502") causes the resin layer (502") to de-bond from the fiber layer (502') of the substrate (502).
Clause 20. A material-coating system (200) comprising: a substrate (202); a reflective layer (208) deposited on the substrate (202); a laser-ablation layer (204) deposited on the reflective layer(208); and a topcoat layer (206) deposited on top of the laser-ablation layer (204), wherein the topcoat layer (206) is at least partially transparent to laser light (106) in a designated wavelength, wherein the laser-ablation layer (204) is doped with an additive material (304) that is tuned to absorb the designated wavelength of the laser light (106) such that the application of the laser light (106) in the designated wavelength to the laser-ablation layer (204) causes the laser-ablation layer (204) and the topcoat layer (206) to collectively de-bond from the substrate (202), and wherein the reflective layer (208) is configured to reflect laser light (106) in the designated wavelength.
Clause 21. An aircraft (100) comprising an external surface (102) that is coated with the material-coating system (200) of any of Clauses 1 - 10 or Clause 20, wherein the external surface (102) comprises the substrate (202).

It will be understood that the configurations and/or approaches described herein are exemplary in nature, and that these specific examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein.

## Claims

1. A material-coating system (200) comprising:
a substrate (202);
a laser-ablation layer (204) deposited on the substrate (202); and
a topcoat layer (206) deposited on top of the laser-ablation layer (204),
wherein the topcoat layer (206) is at least partially transparent to laser light (106) in a designated wavelength, and
wherein the laser-ablation layer (204) is tuned to absorb the designated wavelength of the laser light (106) such that the application of the laser light (106) in the designated wavelength to the laser-ablation layer (204) causes the laser-ablation layer (204) and the topcoat layer (206) to collectively de-bond from the substrate (202).

2. The material-coating system (200) of claim 1, wherein the laser-ablation layer (204) is doped with an additive material (304) that is tuned to absorb laser light (106) in the designated wavelength.

3. The material-coating system (200) of claim 2, wherein the additive material (304) comprises nano-sized particles, and optionally,
wherein the nano-sized particles comprise at least one of nanodiamonds, carbon nanotubes, gold nanoparticles, graphene, and nanoclay.

4. The material-coating system (200) of claim 2, wherein the additive material (304) comprises micron-sized particles.

5. The material-coating system (200) of any of claims 2-4, wherein the additive material (304) comprises a mixture of nano-sized particles and micron-sized particles.

6. The material-coating system (200) of any preceding claim, wherein the topcoat layer (206) is a visually transparent clear coat layer.

7. The material-coating system (200) of any preceding claim, further comprising:
a reflective layer (208) deposited in between the laser-ablation layer (204) and the substrate (202) and configured to reflect laser light (106) in the designated wavelength.

8. The material-coating system (200) of any preceding claim, wherein the substrate (202) comprises a metal alloy.

9. The material-coating system (200) of any preceding claim, wherein the substrate (502) comprises a fiber layer (502') and a resin layer (502"), and wherein the resin layer (502") is tuned to absorb the designated wavelength of the laser light (508) such that the application of the laser light (508) in the designated wavelength to the resin layer (502") causes the resin layer (502") to de-bond from the fiber layer (502') of the substrate (502).

10. An aircraft (100) comprising an external surface (102) that is coated with the material-coating system (200) of any preceding claim, wherein the external surface (102) comprises the substrate (202).

11. A process for fabricating the material-coating (200) system of any preceding claim, the process comprising:
applying the laser-ablation layer (204) on top of the substrate (202); and
applying the topcoat layer (206) on top of the laser-ablation layer (204).

12. The process of claim 11, further comprising:
applying a reflective layer (208) on top of the substrate (202); and
applying the laser-ablation layer (204) on top of the reflective layer (208).

13. The process of claim 11 or claim 12, further comprising:
doping the laser-ablation layer (204) with an additive material (304) that is tuned to absorb the laser light (106) in the designated wavelength.

14. A method of ablating the material-coating system (200) of any of claims 1 - 10, the method comprising:
applying laser light (106) in the designated wavelength to the laser-ablation layer (204) so that the laser-ablation layer (204) absorbs sufficient energy from the laser light (106) to cause the laser-ablation layer (204) and the topcoat layer (206) to collectively de-bond from the substrate (202).

15. The method of claim 14, further comprising, when the material-coating (200) system comprises the fiber layer (502') and the resin layer (502") of claim 9;
applying the laser light (106) in the designated wavelength to the resin layer (502") so that the resin layer (502") layer (204) absorbs sufficient energy from the laser light (106) to cause the resin layer (502") to de-bond from the fiber layer (502') of the substrate (502).
